# EUROPEAN PATENT APPLICATION

(11) **EP 4 549 044 A1**
(43) Date of publication of application: **07.05.2025**
(21) Application number: 24203005.4
(22) Date of filing: 26.09.2024
(51) Int. Cl.: B21D 22/16, B21D 22/28, B21D 35/00, F04D 13/06, H02K 5/128, H02K 15/14, F04D 29/42

(54) **FORMING METHOD OF SHIELDING SLEEVE**

(30) Priority: 01.11.2023 CN 202311460300
(71) Applicant: Anhui Shinhoo Canned Motor Pump Co., Ltd., Hefei City, Anhui Province 230000 (CN)
(72) Inventor: HAN, Zongmei, Hefei City, Anhui Province, 230000 (CN); TENG, Jinshui, Hefei City, Anhui Province, 230000 (CN); XU, Feng, Hefei City, Anhui Province, 230000 (CN); CHEN, Zhongliang, Hefei City, Anhui Province, 230000 (CN)
(74) Representative: Dennemeyer & Associates S.A.

(57) **Abstract**

The present invention relates to a forming method of a shielding sleeve, including the following steps: blanking: cutting a stainless steel plate into a rounded plate, a thickness of which is 0.97mm-lmm; coating oil: coating a surface of the rounded plate with a drawing oil; two rounds of drawing: using a hydraulic press to draw the oil-coated rounded plate twice to form a drawn piece, a height of which is 28mm-28.5mm; spin drawing: using a spinning machine to spin draw the drawn piece to form a spin-drawn piece, wherein, a height of the spin-drawn piece is 64.9mm-65.1mm, and a roughness of an inner wall or an outer wall of the spin-drawn piece is 0.004µm-0.006µm. Through two rounds of drawing and spin drawing, the process is simplified, the forming efficiency is improved, the roughness of the inner and outer walls of the shielding sleeve is reduced, the accumulation of scale and impurities is reduced, rusting is also delayed, the rotor is prevented from getting stuck, the efficiency of the motor is improved, and the service life of the circulation pump is extended. The spinning machine can control the accuracy of the forming size, making the inner and outer diameters of the formed shielding sleeve more accurate, and making the shielding sleeve better match with the stator and rotor.

## Description

### Technical field

The present invention relates to the field of shielding sleeve forming technology, and specifically to a forming method of a shielding sleeve.

### Background

At present, a shielding sleeve can be applied to a circulating pump to isolate the rotor and stator, while preventing the external water source from entering the interior and damaging the internal components. The outer diameter of the shielding sleeve is closely fitted with the stator, and the inner diameter of the shielding sleeve has a gap with the rotor. If the outer diameter of the shielding sleeve is too small, the stator and shielding sleeve will loosen, which will affect the function of the circulating pump; if the outer diameter of the shielding sleeve is too large, it will deform the shielding sleeve, causing the interior of the shielding sleeve to get stuck with the rotor, resulting in loss of function of the motor; if the gap between the shielding sleeve and rotor is too large, it will reduce the power of the motor; if the gap between the shielding sleeve and rotor is too small, it will cause the rotor to get stuck, causing motor failure. Therefore, there is a high requirement for the accuracy of the forming size of the shielding sleeve for the stator.

During the long-term use of the circulating pump, due to scale, impurities, rust, and other factors, the motor power may decrease, and even the rotor may become stuck, causing motor failure.

In order to solve the above problems, in the prior art, the blank is subjected to processes such as multiple drawing, annealing, and bright drawing to brighten the surface of the shielding sleeve, reduce the accumulation of scale and impurities, and delay rusting, further preventing the rotor from getting stuck. However, the above forming processes involve multiple steps, the brightness of the shielding sleeve cannot meet the accuracy requirements, and the size accuracy of the formed shielding sleeve is difficult to control, requiring additional processes such as fine turning.

Therefore, there is an urgent need for a forming method of shielding sleeves to solve the above technical problems.

### Summary of Invention

The object of the present invention is to propose a forming method of shielding sleeve to solve one of the above problems.

To achieve the above object, the present invention provides a forming method of a shielding sleeve, which includes the following steps:
Step S1, blanking: cutting a stainless-steel plate into a rounded plate, a thickness of which is 0.97mm-1mm;
Step S2, coating oil: coating the surface of the rounded plate with a drawing oil;
Step S3, two rounds of drawing: using a hydraulic press to stretch the oil-coated rounded plate twice to form a drawn piece, a height of which is 28mm-28.5mm;
Step S4, spin drawing: using a spinning machine to spin draw the drawn piece to form a spin-drawn piece, a height of which is 64.9mm-65.1mm, and a roughness of an inner wall or an outer wall of which is 0.004µm-0.006µm.

Further, a wall thickness of the spin-drawn piece ranges from 0.3mm to 1mm.

Further, the wall thickness of the spin-drawn piece is 0.3mm.

Further, Step S3 includes the following steps:
Step S31: subjecting the oil-coated rounded plate to a first drawing process using the hydraulic press to form a process piece, the height of which is 15mm-15.5mm; and
Step S32: subjecting the process piece to a second drawing process using the hydraulic press to form the drawn piece.

Further, in Step S4, the drawn piece is inserted into a positioning mold core of the spinning machine, and a shape of the positioning mold core is matched to a shape of the formed shielding sleeve.

Further, after Step S4, the forming method also includes the following step:
Step S5, flanging: flanging the spin-drawn piece using the hydraulic press.

Further, after Step S4, the forming method also includes the following step:
Step S6, forming a small head: subjecting a small head of the spin-drawn piece to a punching forming process using a punch to form a small head end.

Further, after Step S4, the forming method also includes the following steps:
Step S7, forming: subjecting the spin-drawn piece to a forming drawing process using the hydraulic press to form a formed piece, a height of which is 65.1mm-65.3mm, an outer diameter of a stop collar of which is 64.9mm-65.15mm, an inner diameter of which is 39.4mm-39.55mm, and an outer diameter of which is 40mm-40.1mm.

Further, after Step S4, the forming method also includes the following step:
Step S8, trimming: removing the excess edge of the flange formed on the drawn piece using a punch, wherein the diameter of the trimmed flange is 83mm-84mm.

Further, the inner diameter of the drawn piece is 39.4mm to 39.5mm.

The beneficial effects of the present invention are as follows:
The forming method of a shielding sleeve provided in the present invention includes the following steps:
Step S1, blanking: cutting a stainless-steel plate into a rounded plate, the thickness of which is 0.97mm-1mm;
Step S2, coating oil: coating the surface of the rounded plate with a drawing oil;
Step S3, two rounds of drawing: using a hydraulic press to stretch the oil-coated rounded plate twice to form a drawn piece, a height of which is 28mm-28.5mm;
Step S4, spin drawing: using a spinning machine to spin draw the drawn piece to form a spin-drawn piece, a height of which is 64.9mm-65.1mm, and a roughness of an inner wall or an outer wall of which is 0.004µm-0.006µm.

The forming requirements of the shielding sleeve can be met through two rounds of drawing and spin drawing. The method has the following characteristics:
No annealing treatment is required, and the number of drawings is reduced. Only two rounds of drawing are needed to make the drawn piece have a height of 28mm-28.5mm for spin drawing. The process is simplified, easy to operate, and with improved forming efficiency.

The thinning is achieved via direct spinning without annealing and does not require softening of the metal, improving the strength of the shielding sleeve and providing more stable forming size.

Spin drawing can brighten the inner and outer walls of the shielding sleeve. Compared to the roughness of 0.4µm of the brightly drawn shielding sleeve, the roughness of the shielding sleeve formed in the present invention can reach 0.004µm-0.006µm, further reducing the roughness of the inner and outer walls of the shielding sleeve, reducing the accumulation of scale and impurities, and also delaying rusting, further preventing rotor from getting stuck, improving motor efficiency, and extending the service life of the circulating pump.

The spinning machine can control the accuracy of the forming size during the spin drawing process, making the inner and outer diameters of the formed shielding sleeve more accurate, allowing the shielding sleeve to better fit with the stator and rotor, preventing the shielding sleeve from being severely deformed, excessively loosened, or causing the rotor to get stuck, ensuring the normal operation of the motor.

### Description of the Drawings

Fig. 1 is a schematic diagram of a forming method of a shielding sleeve according to an embodiment of the present invention;
Fig. 2a is a structural schematic diagram of a spin-drawn piece formed from a stainless-steel plate through Step S4 in the forming method of a shielding sleeve according to an embodiment of the present invention;
Fig. 2b is a structural schematic diagram of a flanged piece formed from the spin-drawn piece through Step S5 in the forming method of a shielding sleeve according to an embodiment of the present invention;
Fig. 2c is a structural schematic diagram of a small head end formed from the flanged piece through Step S6 of forming a small head in the forming method of a shielding sleeve according to an embodiment of the present invention;
Fig. 2d is a structural schematic diagram of the formed piece through Step S7 in the forming method of a shielding sleeve according to an embodiment of the present invention;
Fig. 2e is a structural schematic diagram after flanging and trimming through Step S8 in the forming method of a shielding sleeve according to an embodiment of the present invention;
Fig. 2f is a structural schematic diagram of a shielding sleeve formed by the forming method of a shielding sleeve according to an embodiment of the present invention.

In these figures:
100: shielding sleeve; 200: spin-drawn piece; 300: flanged piece; 400: formed piece;
1: barrel part; 2: flange; 3: flanged part; 4: small head end; 5: stop collar; 6: screw hole.

### Description of specific embodiments

The technical solution of the present invention is further described below in conjunction with the accompanying drawings and through specific embodiments. It is understood that the specific embodiments described herein are only used to explain the present invention and are not intended to limit the present invention. In addition, it is also necessary to note that, for ease of description, only the relevant parts of the drawings are shown, not all of them.

Some orientation words are defined in the present invention. In the absence of contrary instructions, the use of orientation words such as "up", "down", "left", "right", "inside", and "outside" is for ease of understanding and does not constitute a limitation on the scope of protection of the present invention.

In the present invention, unless otherwise specified and defined, the first feature "above" or "below" the second feature can include the first feature directly contacting with the second feature or can include the first feature contacting with the second feature through another feature between them. Moreover, the first feature "on", "above" and "over" the second feature include the first feature directly above and obliquely above the second feature, or simply indicate that the horizontal height of the first feature is higher than that of the second feature. Moreover, the first feature "below", "under" and "underneath" the second feature include the first feature directly below and obliquely below the second feature, or simply indicate that the horizontal height of the first feature is lower than that of the second feature.

In the description of the present invention, unless otherwise explicitly specified and limited, the terms "connect", "couple", and "fix" should be broadly understood. For example, they may be fixed connections, removable connections, or integrated; they may be mechanical connections or electrical connections; they can be directly connected or indirectly connected through intermediate media; or they can be the internal connection of two components or the interaction between two components. For those skilled in the art, the specific meaning of the above terms in the present invention can be understood based on specific circumstances.

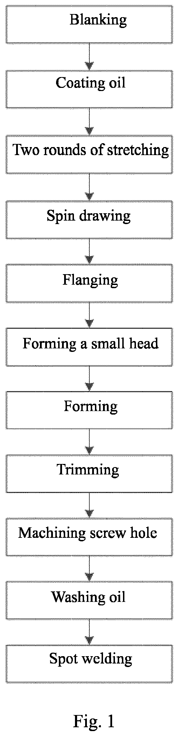

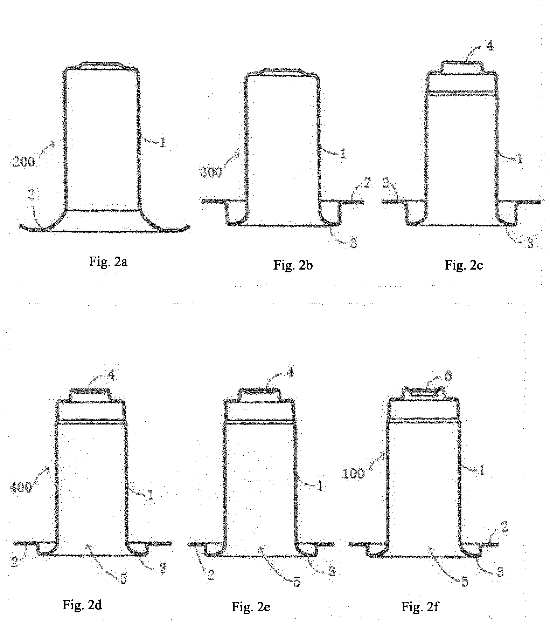

As shown in Fig. 1, this embodiment provides a forming method of a shielding sleeve, for the use in forming a stainless-steel plate into a shielding sleeve shown in Figure 2f, which includes the following steps:
Step S1, blanking: cutting a stainless-steel plate into a rounded plate, a thickness of which is 0.97mm-1mm;
Step S2, coating oil: coating the surface of the rounded plate with drawing oil;
Step S3, two rounds of drawing: using a hydraulic press to stretch the oil-coated rounded plate twice to form a drawn piece, a height of which is 28mm-28.5mm;
Step S4, spin drawing: using a spinning machine to spin draw the drawn piece to form a spin-drawn piece 200. As shown in Fig. 2a, a height of the spin-drawn piece 200 is 64.9mm-65.1mm, and a roughness of an inner wall or an outer wall of the spin-drawn piece 200 is 0.004µm-0.006µm.

The forming requirements of the shielding sleeve 100 can be met through two rounds of drawing and spin drawing, with the following characteristics:
No annealing treatment is required, and the number of drawings is reduced. Only two rounds of drawing are needed to make the drawn piece have a height of 28mm-28.5mm for spin drawing. Without multiple drawings and annealings, the height of the drawn piece can be high before bright drawing. The process is simplified, easy to operate, and with improved forming efficiency.

The thinning is achieved via direct spinning without annealing and does not require softening of the metal, improving the strength of the shielding sleeve 100 and providing more stable forming size.

Spin drawing can brighten the inner and outer walls of the shielding sleeve 100, further reducing the roughness of the inner and outer walls of the shielding sleeve 100, reducing the accumulation of scale and impurities, and also delaying rusting, further preventing rotor from getting stuck, improving motor efficiency, and extending the service life of the circulating pump.

The spinning machine can control the accuracy of the forming size during the spin drawing process, making the inner and outer diameters of the formed shielding sleeve 100 more accurate, allowing the shielding sleeve 100 to better fit with the stator and rotor, preventing the shielding sleeve 100 from being severely deformed, excessively loosened, or causing the rotor to get stuck, ensuring the normal operation of the motor.

In Step S1, the stainless-steel plate is cut into the rounded plate using a punch.

Further, the diameter of the rounded plate is 112mm to 112.5mm.

In Step S2, the coating of the drawing oil on the surface of the rounded plate serves to prevent the rounded plate from being scratched or damaged during drawing, thereby extending the lifespan of the drawing mold.

Further, Step S3 includes the following steps:
Step S31: subjecting the oil-coated rounded plate to a first drawing process using the hydraulic press to form a process piece, the height of which is 15mm-15.5mm; and
Step S32: subjecting the process piece to a second drawing process using the hydraulic press to form the drawn piece.

The rounded plate in this embodiment needs to be drawn twice, which reduces the number of steps compared to a process comprising multiple drawings and annealing followed by a bright drawing, and yet can meet the requirements for forming. The rounded plate is subjected to drawing twice, ensuring that the drawn workpiece has good quality.

Further, the inner diameters of both the process piece and the drawn piece are 39.4mm to 39.5mm.

Further, the hydraulic press used for the two rounds of drawing is a 63-ton hydraulic press.

Further, in Step S4, the outer surface of the drawn piece obtained in Step S3 is spin-drawn by an external spinning device on the spinning machine. During the spinning process, the drawn piece is inserted into a positioning mold core of the spinning machine, and then the drawn piece is spin-drawn by the rotating and feedable roller on the external spinning device to make its wall thinner and longer. By doing so, the wall is thinned, which is more material-saving than the existing turning process with margins, that is, a smaller rounded stainless-steel sheet can be selected in the initial stage to avoid excessive waste of materials. At the same time, the surface of the positioning mold core is relatively smooth, and the inner wall of the spin-drawn piece 200 obtained after spinning can also become relatively smooth, making it meet the process requirements, eliminating the need for subsequent turning of its interior, and reducing preparation processes.

Further, in Step S4, the drawn piece is inserted into the positioning mold core of the spinning machine, and a shape of the positioning mold core is matched to a shape of the formed shielding sleeve 100. This setting allows the spin-drawn piece 200 by spin drawn to match the shape of the formed shielding sleeve 100.

Further, the wall thickness of the spin-drawn piece 200 ranges from 0.3mm to 1mm.

Preferably, the wall thickness of the spin-drawn piece 200 is 0.3mm. The smaller the wall thickness of the spin-drawn piece 200, the more conducive it is to heat dissipation.

Further, the drawn piece has a flange 2 and a barrel part 1 during the drawing forming process. During the process in which the drawn piece turns into a spin-drawn piece 200 by spin drawing, the height of the barrel part 1 increases, and the flange 2 still exists.

Further, after Step S4, the forming method also includes the following steps:
Step S5, flanging: flanging the spin-drawn piece 200 using the hydraulic press to form a flanged piece 300, as shown in Fig. 2b.

Specifically, as shown in Fig. 2b, flanging the flange 2 using the hydraulic press to form a flanged part 3.

Further, after Step S4, the forming method also includes the following steps:
Step S6, forming a small head: subjecting a small head of the spin-drawn piece 200 to a punching forming process using a punch to form a small head end 4, as shown in Fig. 2c.

Specifically, in Step S6, the spin-drawn piece 200 is subjected to a punching forming process twice using a punch to form a small head end 4.

In this embodiment, there is no requirement about the sequence of Step S5 and Step S6, and both steps can be performed simultaneously or sequentially, as long as it is convenient for forming.

Further, after Step S4, the forming method also includes the following steps:
Step S7, forming: using the hydraulic press to stretch the spin-drawn piece 200 to form a formed piece 400, as shown in Fig. 2d. The formed piece 400 is created with a stop collar 5, the height of the formed piece 400 is 65.1mm-65.3mm, the outer diameter of the stop collar 5 is 64.9mm-65.15mm, the inner diameter is 39.4mm-39.55mm and the outer diameter is 40mm-40.1mm, that is, the inner diameter of the barrel part 1 is 39.4mm-39.55mm and the outer diameter of the barrel part 1 is 40mm-40.1mm.

Specifically, in this embodiment, the spin-drawn piece 200 is subjected to forming drawing process after being subjected to Steps S5 and S6.

Further, after Step S4, the forming method also includes the following steps:
Step S8, trimming: removing the excess edge of a flange 2 formed on the drawn piece using a punch, wherein a diameter of the trimmed flange is 83mm-84mm, as shown in Fig. 2e.

Further, after Step S8, the forming method also includes the following steps:
Step S9: machining a screw hole 6: machining a screw hole 6 on a small head end 4, as shown in Fig. 2f.

Further, Step S9 includes the following step:
Step S91: punching, using a punch to punch the small head end 4 to form a punched hole;
specifically, the punch is a 63-ton punch;
specifically, the diameter of the punched hole is 9.6mm-9.7mm; and
Step S92, reverse punching: using a hydraulic press to reversely draw the punched hole, so that the height of the punched hole after reverse drawing is 13.1mm-13.2mm.
Step S93, tapping: using a tapping machine to tap the punched hole after reverse drawing, with a thread of M14*1.

Through Steps S1-S9, the stainless-steel plate is process formed to obtain the shielding sleeve 100, as shown in Fig. 2f.

Further, after Step S9, the forming method also includes the following steps:
Step S10, washing the oil: using an ultrasonic oil-washing machine to clean the shielding sleeve 100.

Further, after Step S10, the forming method also includes the following steps:
Step S11, spot welding: using a spot welder to weld the shielding sleeve 100 and the bearing seat on the stator together.

The outer diameter of the shielding sleeve 100 formed by the forming method of a shielding sleeve provided in this embodiment is 40 mm-40.1mm, and the inner diameter is 39.4mm-39.55mm, as shown in Figure 2f.

A roughness test was performed on the shielding sleeve obtained through the bright drawing and the shielding sleeve 100 obtained by the forming method provided in this embodiment. The former has a roughness of 0.4µm, while the roughness of the shielding sleeve 100 formed in this embodiment can reach 0.004µm-0.006µm, further reducing the roughness of the inner and outer walls of the shielding sleeve 100, reducing the accumulation of scale and impurities, delaying rusting, further preventing rotor from getting stuck, improving the efficiency of the motor, and extending the service life of the circulating pump.

Although the present invention has been described in detail with general descriptions, specific embodiments, and tests, it is obvious to those skilled in the art that some modifications or improvements can be made on the basis of the present invention. Therefore, these modifications or improvements made without deviating from the spirit of the present invention all fall within the scope of protection of the present invention.

## Claims

1. A forming method of a shielding sleeve, **characterized in that**, the forming method includes the following steps:
Step S1, blanking: cutting a stainless-steel plate into a rounded plate, a thickness of which is 0.97mm-1mm;
Step S2, coating oil: coating the surface of the rounded plate with a drawing oil;
Step S3, two rounds of drawing: using a hydraulic press to draw the oil-coated rounded plate twice to form a drawn piece, a height of which is 28mm-28.5mm;
Step S4, spin drawing: using a spinning machine to spin draw the drawn piece to form a spin-drawn piece (200), wherein, a height of the spin-drawn piece (200) is 64.9mm-65.1mm, and a roughness of an inner wall or an outer wall of the spin-drawn piece (200) is 0.004µm-0.006µm.

2. The forming method of a shielding sleeve according to claim 1, **characterized in that**, a wall thickness of the spin-drawn piece (200) ranges from 0.3mm to 1mm.

3. The forming method of shielding sleeve according to claim 1 or 2 **characterized in that**, a wall thickness of the spin-drawn piece (200) is 0.3mm.

4. The forming method of a shielding sleeve according to claim 1, **characterized in that**, Step S3 includes the following steps:
Step S31: subjecting the oil-coated rounded plate to a first drawing process using the hydraulic press to form a process piece, the height of which is 15mm-15.5 mm; and
Step S32: subjecting the process piece to a second drawing process using the hydraulic press to form the drawn piece.

5. The forming method of a shielding sleeve according to claim 1, **characterized in that**, in Step S4, the drawn piece is inserted into a positioning mold core of the spinning machine, and a shape of the positioning mold core is matched to a shape of the formed shielding sleeve (100).

6. The forming method of a shielding sleeve according to claim 1, **characterized in that**, after Step S4, the forming method also includes the following step:
Step S5: flanging, flanging the spin-drawn piece (200) using the hydraulic press.

7. The forming method of a shielding sleeve according to claim 1, **characterized in that**, after Step S4, the forming method also includes the following step:
Step S6: forming a small head, subjecting a small head of the spin-drawn piece (200) to a punching forming process using a punch to form a small head end (4).

8. The forming method of a shielding sleeve according to claim 1, **characterized in that**, after Step S4, the forming method also includes the following step:
Step S7: forming: subjecting the spin-drawn piece (200) to a forming drawing process using the hydraulic press to form a formed piece (400), wherein a height of the formed piece (400) is 65.1mm-65.3mm, an outer diameter of a stop collar (5) is 64.9mm-65.15mm, an inner diameter is 39.4mm-39.55mm, and an outer diameter is 40mm-40.1mm.

9. The forming method of a shielding sleeve according to claim 1, **characterized in that**, after Step S4, the forming method also includes the following step:
Step S8: trimming: removing the excess edge of a flange (2) formed on the drawn piece using a punch, wherein a diameter of the trimmed flange (2) is 83mm-84mm.

10. The forming method of a shielding sleeve according to claim 1, **characterized in that**, an inner diameter of the drawn piece is 39.4mm to 39.5mm.
